# EUROPEAN PATENT SPECIFICATION

(11) **EP 3 150 825 B1**
(45) Date of publication and mention of the grant of the patent: **17.11.2021**
(21) Application number: 16190045.1
(22) Date of filing: 22.09.2016
(51) Int. Cl.: F02C 3/30, F01N 3/10, F02C 9/00

(54) **PROCESS AND INSTALLATION FOR CONTROLLING THE QUANTITY OF SOLID PARTICLES EMITTED BY A COMBUSTION TURBINE**
VERFAHREN UND INSTALLATION ZUR STEUERUNG DER QUANTITÄT VON FESTPARTIKELN, DIE VON EINER VERBRENNUNGSTURBINE AUSGESTOSSEN WERDEN
PROCÉDÉ ET INSTALLATION DE RÉGULATION DE LA QUANTITÉ DE PARTICULES SOLIDES ÉMISES PAR UNE TURBINE DE COMBUSTION

(30) Priority: 29.09.2015 FR 1559155
(43) Date of publication of application: 05.04.2017
(73) Proprietor: GE Energy Products France SNC, 90000 Belfort (FR)
(72) Inventor: VIERLING, Matthieu Paul Frederic, 90000 Belfort (FR); ABOUJAIB, MohamadMaher, 90000 Belfort (FR); PENA, Ezio Mauricio, 90000 Belford (FR); MARTIN, Denis Michel, 90007 Belfort (FR)
(74) Representative: BRP Renaud & Partner mbB Rechtsanwälte Patentanwälte Steuerberater

(56) References cited:
- US-A1- 2007 220 873
- US-A1- 2011 030 331
- US-A1- 2014 230 446
- None

## Description

The present invention concerns combustion turbines or gas turbines, and concerns specifically the controlling of concentration of solid particles emitted by gas turbines during the combustion of a liquid fuel.

A wide range of liquid fuels available for feeding the combustion turbines. This mainly includes heavy fuel oils, crude oils, heavy or light distilled oils, gas oils, kerosene, naphtha, biodiesel, bioethanol, etc.

A heavy oil type fuel contains vanadium and other types of contaminants, including sulfur, and consequently, its combustion generates solid ash similar to solid particles.

Based on the performance of the combustion system in the constitution of a combustion turbine, the liquid or gaseous fuels may generate emissions of dust or ash, and generally, solid particles, which are released to the atmosphere, through a chimney.

Among the solid particles, soot corresponds to the organic fraction of dust, and includes carbon, hydrogen and possibly, oxygen and nitrogen, to a major extent.

The solid particles may also contain a mineral fraction, generally consisting of alkali metals or heavy metals.

The regulations related to combustion turbines imposed globally or locally across the countries set maximum limits for emission of solid particles into the atmosphere.

For example, when a combustion turbine using a liquid fuel is working at its rated speed, the maximum value of emission of dust from a stationary combustion turbine to the atmosphere should be 50 mg/Nm³.

In order to restrict the quantity of solid particles emitted, a combustion catalyst is generally used.

There are different types of combustion catalysts that are capable of reducing soot emissions in installations. The choice of the combustion catalyst depends on the type of fuel, the type installation used and the maximum concentration of solid particles imposed by the regulations.

US2011/030331A1 discloses a system which includes an emissions reduction system including a compressor in fluid communication with a catalyst mixing tank.

US2007/220873A1 discloses hydrocarbon transformations through radical reaction which are carried out in presence of: a carbon nano/meso precursor, an aluminium containing support, and a lanthanide catalyst deposited on said aluminium containing support.

In the light of the foregoing, the present invention has the objective of controlling the quantity of solid particles emitted by a combustion turbine, regardless of the operating regimes of the combustion turbine.

Thus, the invention has the primary objective of providing a method of controlling the quantity of solid particles emitted by a combustion turbine, during the combustion of a liquid fuel, by injecting a combustion catalyst suitable for reducing the quantity of solid particles generated during combustion, as defined in claim 1.

These process steps allow to implement the cyclic phases, keeping in view the hysteresis of injection of catalyst, thus enabling a more precise control of the quantity of emitted particles and/or optimizing the consumption of combustion catalyst. Advantageously, the temperature of the flame of the combustion turbine is more than or equal to 1363 K (1090°C).

For example, the catalyst is injected into a liquid fuel system feed line upstream of the combustion system of the combustion turbine.

Alternatively, the catalyst can be injected directly into the combustion turbine unit. Advantageously, the maximum threshold value of concentration of particles is between 45 mg/Nm³ and 55 mg/Nm³. This range of concentration relates to the maximum limit value of emission of particles to the atmosphere imposed by the regulatory authorities worldwide.

With respect to the minimum target value, this concentration of particles is between 20 mg/Nm³ and 30 mg/Nm³.

Preferably, the combustion catalyst includes at least an element selected from iron (III) oxides, cerium (III) oxides, cerium (IV) oxides and their mixtures.

Preferably, the quantity of particles emitted is measured continuously.

The invention also has the objective of controlling the quantity of solid particles emitted by a combustion turbine, when using a liquid fuel, including means to inject a combustion catalyst suitable for reducing the quantity of particles generated by the installation.

This system also includes the means of measurement of the quantity of particles emitted and a central control unit suitable for controlling the injection means so as to inject the combustion catalyst into the combustion turbine when the measured quantity of particles is higher than a maximum threshold value and to stop the injection of the catalyst when the measured quantity of particles reaches a minimum target value.

The invention also concerns a gas turbine installation according to claim 9 comprising a system of control as defined above.

Other objectives, characteristics and advantages of the invention are provided in the following description, given only by way of non-limiting example, and with reference to the drawings attached, in which:
Fig. 1 is a synoptic diagram of the constitution of an installation of gas turbine comprising a system of control according to the invention; and
Fig. 2 shows the curves illustrating the successive phases of injection of fuel and stopping of the injection.

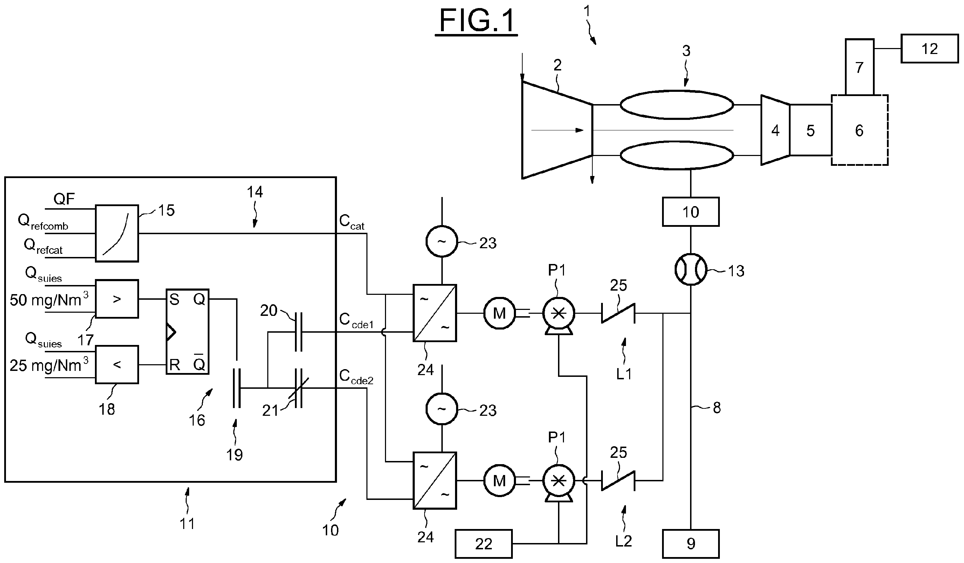

First of all, please refer to Fig. 1 which illustrates the structure of a combustion turbine system according to an embodiment of the invention.

As it can be seen, the combustion turbine, designated by the general reference number 1, successively includes a compressor 2 which ensures the compression of the ambient air admitted at the inlet of the combustion turbine, one or more combustion chambers 3 in which the compressed air from the compressor is mixed with a fuel and ignited, and a turboexpander 4 in which the ignited gas is expanded to produce mechanical energy for driving the compressor and to provide the mechanical energy required for the application implementing the combustion turbine.

At the outlet, gas is recovered by an exhaust system 5 connected to an energy recovery boiler 6 for evacuation to the outside through a chimney 7.

The combustion chambers 3 are fed with fuel, in this case a liquid fuel, through an inlet line 8 connected to a fuel source 9 and equipped with a flow regulator 10.

As indicated earlier, the combustion in the combustion chambers 3 produce the solid particles, such as soot. These particles pass through the turboexpander 4, the exhaust system 5, the boiler 6, and are emitted to the outside by the chimney 7.

The combustion turbine system 1 includes injection means 10 to inject a combustion catalyst into the gas turbine in order to reduce the quantity of solid particles, and more particularly the concentration of solids generated during combustion.

The injection means 10 can be directly connected to the combustion chambers 3 so as to inject the combustion catalyst into the combustion chambers.

They can be also connected, as represented, to liquid fuel feed line 8 so as to inject the combustion catalyst into the feed line 8.

The injection means 10 comprise a central control unit 11, a device 12 for measurement of the concentration of particles emitted at the outlet of chimney 12 and a measurement device 13 for measuring the liquid fuel flow in the feed line 8.

The central control unit 11 comprises a first controlling stage 14 which includes a mapping 15 in which the reference flow values of combustion catalyst *Qrefcat* are stored as a function of reference flow values of fuel *Qrefcomb.* From the flow value of fuel *QF* delivered by the measurement device 13, the first controlling stage 14 retrieves a command catalyst flow value *Ccat* from the mapping 15.

In other words, it concerns adapting the combustion catalyst injection flow as a function of liquid fuel flow, which itself depends on the charge level of the element driven by the combustion turbine, for example an alternator.

The central control unit 11 also comprises a second controlling stage 16 which receives the soot flow value Qsuies provided by the measurement device 12. These measured values are compared using comparators 17 and 18 with a maximum threshold value and a minimum target value.

The output of the comparators 17 and 18 is provided to a combined logic circuit, constituted, for example, by a RF rocker whose output depends on the value of the concentration of soot with respect to the threshold value.

The output of the RF rocker switches to a high level, if the soot concentration *Qsuies* is higher than the maximum threshold value and switches to a low level, if the soot concentration reaches a minimum target value, and maintains its status, if the soot concentration is between minimum target value and the maximum threshold value.

The combustion catalyst injection means 10 comprise two redundant catalyst injection lines L1 and L2, where one is an injection line intended to be used during normal operation of the installation and the other one is an optional emergency injection line. The injection lines each are controlled by command signals *Cde1* and *Cde2* coming from the combined logic circuit 7 through a first component 19, a switch type, to control the operation or shutdown of the two injection lines L1 and L2 and two components 20 and 21, also switch type, to selectively control the operation of the injection lines L1 and L2.

Each of the injection lines L1 and L2 comprises a dosing pump, respectively PI and P2, fed from a combustion catalyst feed system 22 and driven by an electric motor M, which itself is powered by alternative sources, such as 23, through converters 24 receiving the command catalyst flow signal *Ccat* and driven by the command signals *Cde1* and *Cde2.* The output of each of the dosing pumps P1 and P2 is connected to liquid fuel feed line 8 through valves such as 25.

So, when the central control unit 11 detects that the soot concentration measured by the measurement device 12 is higher than the maximum threshold value, it commands the dosing pump by keeping the command signal *Cde*1 at the high level in order to power the motor M so as to deliver a combustion catalyst flow *Ccat* retrieved from the mapping 15 as a function of a fuel flow and a reference catalyst flow.

If the concentration of solid particles becomes lower than the minimum target value, then the injection of combustion catalyst is stopped.

For example, for a combustion turbine generating a rated electrical power of 100 MW and consuming about 32 tonnes/hour of liquid fuel, the ratio between the combustion catalyst flow and the liquid fuel flow is preferably between 0.003% and 0.006%, which represents between 1 and 2 kg/hour of combustion catalyst. The central control unit 11 controls the dosing pump according to the measured concentration level of soot particles.

Above the maximum concentration threshold value, for example between 45 mg/Nm³ and 55 mg/Nm³, the central control unit 11 starts the dosing pump. Below the target value, for example between 20 mg/Nm³ and 30 mg/Nm³, the central control unit 11 stops the dosing pump.

Preferably, the maximum threshold and target values will be set at 50 mg/Nm³ and 25 mg/Nm³, respectively. Continuous monitoring of the concentration level enables to restart the dosing pump later.

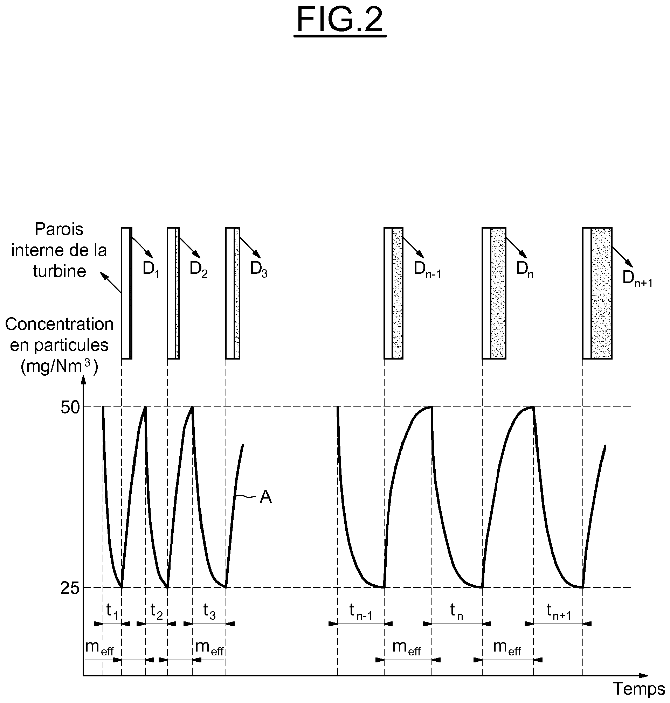

As indicated earlier, in case of failure of the first injection L1 line, the second injection L2 line is activated to ensure catalyst injection based on the signals *Cde2* and *Ccat.* Now please refer to Fig. 2, which illustrates the operation of the system of control described.

This figure illustrates the variation of concentration of particles as a function of time (curve A) and shows the evolution depending on the time of thickness D1,..., Dn, Dn+1 of a layer of catalyst deposited on the inner wall of the turbine.

As it can be seen in Fig. 2, the phases of injection of combustion catalyst are thus implemented in a cyclic manner during the operation of the combustion turbine.

The interval between two cycles of combustion catalyst injection is based on the configuration of the installation. The duration between two cycles of consecutive injection (T1, T2, T3, Tn-1, Tn, Tn+1, etc.) increases depending on the time of use of installation. However, Tn corresponds to the maximum duration between two cycles of combustion catalyst injection. Tn+1 is lower than or equal to Tn.

However, it should be noted that the injected active combustion catalyst particles adhere to the walls of the installation forming layers of active agents of variable thickness as a function of time, producing a catalytic effect of conversion of the solid particles into CO₂.

After the combustion catalyst injection is interrupted, the active particles adhering to the walls continue their catalytic conversion effect. When catalyst injection is interrupted, the layers of active particles subjected to movement and/or propagation of combustion gases tend to be gradually carried away toward the chimney and simultaneously consumed. As a result, the consumption of active particles is such that the catalytic effect disappears when all the active particles have been consumed. It is at this time that it is necessary to proceed to a new injection of the combustion catalyst.

As this is being done, this effect allows to carry out combustion catalyst injection sequences at intervals, whose duration decreases with time, while the injection stopping sequences increase inversely proportionately, up to a limit corresponding to the saturation of active particles on the walls of the installation. This saturation phenomenon is related to the thickness of the layers of deposits and the speed of propagation of the combustion gases. In other words, the layer of active particles does not thicken indefinitely, since the deposits are destabilized and tend to fall off from the walls under the effect of speed of the combustion gas. The combustion catalyst injection interval depends on the result of measurement of the particle concentration, higher than 25 mg/Nm³ and lower than 50 mg/Nm³. The duration of the intervals depends on the inner surface of the walls of the combustion installation, the exhaust gas flow and the temperature.

The fuel used for feeding the combustion chambers can have various types. For example, we can use a heavy fuel oil, crude oil, a heavy or light distilled, gas oil, kerosene, naphtha, biodiesel, bioethanol. However, it should be noted that using other liquid fuel types is not beyond the scope of the invention.

We can use cerium(III) oxide, cerium(IV) oxide or an iron oxide or a mixture of these catalysts as the oxidation catalyst. The chemical reactions of conversion of soot into carbon dioxide are as below:
For cerium(IV) oxide, the reaction is as below:

   4 Ce02 + C (suies) → 2Ce₂O₃ + CO₂.
For cerium (III), the reaction is as below:

   Ce₂O₃ + ½ O₂ → 2 CeO₂,

   and

   4CeO₂ + C (suies) → 2 Ce₂O₃ + CO₂.

It should be noted that cerium(III) is converted into cerium(IV) due to the presence of oxygen in the flames:

Ce₂O₃ + ½ O₂ → 2 CeO₂

## Claims

1. A method of controlling the quantity of solid particles emitted by a combustion turbine (1), during the combustion of a liquid fuel, by injecting a combustion catalyst suitable for reducing the quantity of solid particles generated during combustion, the method comprising:
measuring the quantity of particles (*Qsuies*) emitted during combustion;
measuring the flow of liquid fuel in a feed line (8) provided to the combustion turbine;
injecting the combustion catalyst into the combustion turbine when the concentration of particles measured is higher than a maximum threshold value, wherein the flow of the combustion catalyst injected into the combustion turbine is a function of the measured flow of liquid fuel; and
stopping the injection of the catalyst when the measured quantity of particles is lower than a minimum target value.

2. The method according to claim 1, in which the temperature of the flame of the combustion turbine is more than or equal to 1363K.

3. The method according to one of claims 1 and 2, in which the catalyst is injected into the feed line (8) of the said liquid fuel system, upstream of the combustion system of the combustion turbine.

4. The method according to one of claims 1 and 2, in which the catalyst is injected into the combustion chambers (3) of a combustion system of the combustion turbine.

5. The method according to one of claims 1 to 4, in which the maximum threshold value is a particle concentration range between 45 mg/Nm³ and 55 mg/Nm³.

6. The method according to one of claims 1 to 5, in which the minimum target value is a particle concentration range between 20 mg/Nm³ and 30 mg/Nm³.

7. The method according to one of claims 1 to 6, in which the combustion catalyst includes at least an element selected from iron (III) oxides, cerium (III) oxides, cerium (IV) oxides and their mixtures.

8. The method according to one of claims 1 to 7, in which the concentration of particles emitted is measured continuously.

9. A system for controlling the quantity of solid particles emitted by a combustion turbine (1), during the combustion of a solid fuel, comprising combustion catalyst injection means (10) suitable for reducing the quantity of particles generated during the combustion, **characterized in that** it comprises measurement means (12) for measuring the quantity of emitted particles; a measurement device (13) for measuring the liquid fuel flow in a feed line (8); and a central control unit (11) configured to carry out the method according to any of claims 1 to 8.

10. An installation of turbine gas type comprising the system of claim 9.

## Patentansprüche

1. Verfahren zum Steuern der Menge von Feststoffpartikeln, die von einer Verbrennungsturbine (1) während der Verbrennung eines flüssigen Brennstoffs emittiert werden, durch Einspritzen eines Verbrennungskatalysators, der zum Reduzieren der Menge von Feststoffpartikeln geeignet ist, die während der Verbrennung erzeugt werden, wobei das Verfahren umfasst:
Messen der Menge an Partikeln (*Qsuies*), die während der Verbrennung emittiert werden;
Messen des Flusses von flüssigem Brennstoff in einer Speiseleitung (8), die der Verbrennungsturbine bereitgestellt ist;
Einspritzen des Verbrennungskatalysators in die Verbrennungsturbine, wenn die gemessene Partikelkonzentration höher als ein maximaler Schwellenwert ist, wobei der Fluss des in die Verbrennungsturbine eingespritzten Verbrennungskatalysators eine Funktion des gemessenen Flusses von flüssigem Brennstoff ist; und
Beenden des Einspritzens des Katalysators, wenn die gemessene Partikelmenge niedriger als ein minimaler Sollwert ist.

2. Verfahren nach Anspruch 1, bei dem die Temperatur der Flamme der Verbrennungsturbine größer oder gleich 1363 K ist.

3. Verfahren nach einem der Ansprüche 1 und 2, bei dem der Katalysator in die Speiseleitung (8) des Flüssigbrennstoffsystems stromaufwärts des Verbrennungssystems der Verbrennungsturbine eingespritzt wird.

4. Verfahren nach einem der Ansprüche 1 und 2, bei dem der Katalysator in die Brennkammern (3) eines Verbrennungssystems der Verbrennungsturbine eingespritzt wird.

5. Verfahren nach einem der Ansprüche 1 bis 4, bei dem der maximale Schwellenwert ein Partikelkonzentrationsbereich zwischen 45 mg/Nm³ und 55 mg/Nm³ ist.

6. Verfahren nach einem der Ansprüche 1 bis 5, bei dem der minimale Sollwert ein Partikelkonzentrationsbereich zwischen 20 mg/Nm³ und 30 mg/Nm³ ist.

7. Verfahren nach einem der Ansprüche 1 bis 6, bei dem der Verbrennungskatalysator mindestens ein Element umfasst, das aus Eisen (III) -oxiden, Cer (III) -oxiden, Cer (IV) -oxiden und deren Gemischen ausgewählt ist.

8. Verfahren nach einem der Ansprüche 1 bis 7, bei dem die Konzentration der emittierten Partikel kontinuierlich gemessen wird.

9. System zum Steuern der Menge an Feststoffpartikeln, die von einer Verbrennungsturbine (1) während der Verbrennung eines festen Brennstoffs emittiert werden, umfassend Verbrennungskatalysator-Einspritzmittel (10), die geeignet sind, die Menge an Partikeln, die während der Verbrennung erzeugt werden, zu reduzieren, **dadurch gekennzeichnet, dass** es Messmittel (12) zum Messen der Menge an emittierten Partikeln umfasst; eine Messvorrichtung (13) zum Messen des Flüssigbrennstoffflusses in einer Speiseleitung (8) und eine zentrale Steuereinheit (11), die konfiguriert ist, um das Verfahren nach einem der Ansprüche 1 bis 8 durchzuführen.

10. Installation vom Turbinengas-Typ, umfassend das System nach Anspruch 9.

## Revendications

1. Procédé de commande de la quantité de particules solides émises par une turbine à combustion (1), pendant la combustion d'un carburant liquide, en injectant un catalyseur de combustion approprié pour réduire la quantité de particules solides générées pendant la combustion, le procédé comprenant :
la mesure de la quantité de particules *(Qsuies)* émises pendant la combustion ;
la mesure de l'écoulement de carburant liquide dans une ligne d'alimentation (8) fournie à la turbine à combustion ;
l'injection du catalyseur de combustion dans la turbine à combustion lorsque la concentration de particules mesurée est supérieure à une valeur seuil maximale, dans lequel l'écoulement du catalyseur de combustion injecté dans la turbine à combustion est une fonction de l'écoulement mesuré de carburant liquide ; et
l'arrêt de l'injection du catalyseur lorsque la quantité mesurée de particules est inférieure à une valeur cible minimale.

2. Procédé selon la revendication 1, dans lequel la température de la flamme de la turbine à combustion est supérieure ou égale à 1363 K.

3. Procédé selon l'une des revendications 1 et 2, dans lequel le catalyseur est injecté dans la ligne d'alimentation (8) dudit système de carburant liquide, en amont du système de combustion de la turbine à combustion.

4. Procédé selon l'une des revendications 1 et 2, dans lequel le catalyseur est injecté dans les chambres de combustion (3) d'un système de combustion de la turbine à combustion.

5. Procédé selon l'une des revendications 1 à 4, dans lequel la valeur seuil maximale est une plage de concentration de particules entre 45 mg/Nm³ et 55 mg/Nm³.

6. Procédé selon l'une des revendications 1 à 5, dans lequel la valeur cible minimale est une plage de concentration de particules entre 20 mg/Nm³ et 30 mg/Nm³.

7. Procédé selon l'une des revendications 1 à 6, dans lequel le catalyseur de combustion inclut au moins un élément choisi parmi des oxydes de fer (III), des oxydes de cérium (III), des oxydes de cérium (IV) et leurs mélanges.

8. Procédé selon l'une des revendications 1 à 7, dans lequel la concentration des particules émises est mesurée de façon continue.

9. Système pour commander la quantité de particules solides émises par une turbine à combustion (1), pendant la combustion d'un carburant solide, comprenant un moyen d'injection de catalyseur de combustion (10) approprié pour réduire la quantité de particules générées pendant la combustion, **caractérisé en ce qu'**il comprend un moyen de mesure (12) pour mesurer la quantité de particules émises ; un dispositif de mesure (13) pour mesurer l'écoulement de carburant liquide dans une ligne d'alimentation (8) ; et une unité de commande centrale (11) configurée pour effectuer le procédé selon l'une quelconque des revendications 1 à 8.

10. Installation de turbine de type gaz comprenant le système de la revendication 9.
